# EUROPEAN PATENT SPECIFICATION

(11) **EP 3 955 785 B1**
(45) Date of publication and mention of the grant of the patent: **30.07.2025**
(21) Application number: 20790859.1
(22) Date of filing: 15.04.2020
(51) Int. Cl.: B32B 3/02, B32B 5/02, B32B 5/08, B32B 5/26, B32B 25/10, B32B 25/20, B32B 27/12, B32B 27/28, B32B 27/30, B32B 27/32, B32B 27/34, A47J 36/02

(54) **NONSTICK COMPOSITE MATERIALS AND MOLDED NONSTICK COOKWARE**
NICHTHAFTENDE VERBUNDSTOFFE UND GEGOSSENES NICHTHAFTENDES KOCHGESCHIRR
MATÉRIAUX COMPOSITES ANTI-ADHÉSIFS ET BATTERIE DE CUISINE ANTI-ADHÉSIVE MOULÉE

(30) Priority: 15.04.2019 US 201962834189 P; 20.08.2019 WO PCT/US2019/047249
(43) Date of publication of application: 23.02.2022
(73) Proprietor: Advanced Flexible Composites, Inc., Lake In The Hills, IL 60156 (US)
(72) Inventor: LEWIS, William, Christopher, St. Charles, IL 60175 (US); GAO, Jian, St. Charles, IL 60175 (US); LEWIS, Barton, R., Jr., Algonquin, IL 60102 (US); TERPSTRA, Lambert, Allen, Crystal Lake, IL 60014 (US); SMITH, Paul, A.E., Cary, IL 60013 (US); LEWIS, William, James, Naples, FL 34119 (US)
(74) Representative: Rentsch Partner AG
(86) International application number: PCT/US2020/028287
(87) International publication number: WO 2020/214682

(56) References cited:
- WO-A2-92/08609
- US-A- 4 541 411
- US-A- 5 141 800
- US-A- 5 240 775
- US-A1- 2008 178 747
- US-A1- 2009 110 935
- US-A1- 2009 110 935
- US-A1- 2011 146 501
- US-A1- 2011 311 701
- US-A1- 2013 277 374
- US-B2- 6 761 964
- US-B2- 8 642 171
- US-B2- 8 714 398

## Description

### BACKGROUND OF THE INVENTION

### Field of the Invention

This invention is directed to heat resistant polymer materials and product uses thereof, including cookware, particularly nonstick polymer cooking surfaces, materials, composites, and coatings.

### Discussion of Related Art

Nonstick cookware, including, without limitation, pots, pans, baking sheets, cake/bread pans, etc., have been popular for commercial and residential use for many years. Exemplary common cookware include fluoropolymer, e.g., polytetrafluoroethylene (PTFE), coated metal cookware. Over time, the polymer coating tends to flake off the metal, or otherwise lose effectiveness due to residue buildup. Residential users tend to simply replace the entire cookware item, and commercial/industrial users often send their cookware for recoating. There is a continuing need for improved nonstick cookware, and for cookware without metal which holds heat after removal from oven leading to uneven cooking.

Polymer coated non-metal cooking sheets and baskets are known for heating foods and toasting sandwiches in ovens. Such temperature resistant sheets or baskets are particularly useful for quickly toasting sandwiches in high speed or rapid cook ovens, such as are available from TurboChef Technologies, Inc. (Carrollton, Texas) and/or Welbilt, Inc. (United Kingdom). High speed ovens typically incorporate several cooking elements, such as selected from hot air, infrared, radiant, conductive, steam, and/or a microwave heating elements.
US 2011/0311701 A1 discloses a rigid, durable non-metallic release laminate for holding food products during baking. US 2008/0178747 A1 discloses a food support for placing and removing food items from, and holding food items while in, an oven.

While being useful for toasting or cooking food items, known polymer coated cooking sheets and/or cooking baskets/trays often lack the desired food support, durability, cleanability, heat dissipation (for proper cooking and/or operator safety), and/or appearance for commercial restaurants, particularly when food is prepared in view of customers. Also, these known sheets and baskets are typically removed from an oven with a pizza paddle or equivalent, which does not generally provide the fully desired stability for the removed sheet or basket. U.S. Patent 8,857,652 discloses a cooking support to remedy these issues. There is also a continuing need for an improved cooking apparatus and materials for flexibility in cooking various food items in high temperature/high speed ovens.

### SUMMARY OF THE INVENTION

A general object of the invention is to provide an improved nonstick materials and products thereof, such as cookware, e.g., a pan, basket, tray, sheet, bakeware, and accessories (e.g., lids, covers, and oven or countertop racks, etc.), particularly for use in high speed, rapid cook, and/or conventional ovens. Embodiments of the apparatus provide for easy placement in and removal from ovens, provide structure to hold and support food items, cool down quickly and do not hold heat (e.g., mostly or fully free of metal), and can withstand temperatures over 375° F (191° C) for an indefinite period of time, and more preferably 500° F (260° C).

Another general object of the invention is to provide nonstick, reusable cookware/bakeware including at least a polymer cooking surface. The cooking surface can be formed of a 'nonstick' polymer, contain a non-stick additive as part of the polymer matrix, dip or spray coated with a nonstick polymer, and/or be covered with a removable nonstick polymer surface insert. Various polymers are available for these applications.

Embodiments of this disclosure provide an improved woven/plastic/nonstick laminate material, and that is pressable or otherwise moldable in a forming method to provide shaped cookware or other nonstick items/components, with structural benefits from the pressing.

The invention according to claim 1 defines a method of forming nonstick components, including steps of providing at least two laminate layers, each including a flexible substrate coated with a nonstick material; and pressing the at least two laminates together under heat and pressure to form the cookware. The at least two, and desirably at least three, laminates are aligned over one another for pressing. The individual laminate layers can have a same or different material, size, shape, and/or configuration, depending on need.

The pressing desirably produces a raised rim for structural improvement and/or that is necessary for the use of the component. One or more of the laminates is a rim layer, which extends around a peripheral edge of a further laminate creating a central support surface of only the further laminate. For composites of three laminate layers, each of first laminate and a second laminate of the laminate layers can be a rim layer, wherein the rim layers extend around a peripheral edge of a third laminate of the laminates for edge support and/or creating a central support surface of only the third laminate. In some embodiments, the second laminate is pressed between the first laminate and the third laminate. In one example, the third laminate comprises air flow openings, and is pressed between solid first and second laminates.

The invention according to claim 7 defines a nonstick device including a pressed laminate with structural rigidity of at least two laminate layers pressed or molded together under heat and pressure into a shaped device, wherein each of the laminate layers separately includes a flexible substrate coated with a nonstick coating. The device optionally includes a peripheral raised rim, such as with a first laminate of the laminate layers being a rim layer, wherein the rim layer extends around a peripheral edge of a second laminate of the laminates as an edge support and/or creating a central support surface of only the second laminate.

The device includes three separate laminate layers pressed together. As one example, each of first laminate and a second laminate of the laminate layers is a rim layer, wherein the rim layers extend around a peripheral edge of a third laminate of the laminates creating a support surface of only the third laminate. The third laminate can be pressed above or between the first laminate or the second laminate.

In embodiments of this disclosure, the flexible substrate is impregnated with a heat resistant polymer material. The heat resistant polymer material can be a fluoropolymer (e.g., PTFE, FEP, PFA, MFA^{®}, ETFE), a fluoroelastomer, a silicone rubber, a silicone resin, a urethane rubber, a urethane resin, a polyketone, a polyether ether ketone (PEEK), a polyamide-imide (PAI), a polyphenylene sulfide (PPS), a polyphenylsulfone (PPSU), a liquid crystal polyester (LCP), a polyether sulfone (PES), an epoxy, quartz, fluorinated materials, such as fluorinated mica, combinations thereof, and/or other nonstick, easy clean materials. The flexible substrate can be a woven substrate, non-woven substrate, open mesh/leno weave substrate, braided substrate, and/or unidirectional fabrics, formed of fiberglass, Kevlar, Nomex, carbon fiber, quartz fiber, PEEK, PAEK, PPS, PES, PPSU, LCP, and/or PAI fibers, or combinations of such fibers or yarns. The nonstick coating is desirably applied over at least a top of the polymer material, preferably PTFE or other nonstick material.

In embodiments of this disclosure, the device is cookware for holding food items during cooking, including a food support surface comprising a cooking surface of the nonstick coating. The cookware is pressed or molded in the form of a basket, tray, sheet, pan, bowl or cup, plate, cover, or other cookware accessory, and wherein each of the cookware and food support surface is fully free of metal

The present disclosure includes a composite material, including a flexible substrate impregnated with a heat resistant polymer material, wherein the composite material has a structural rigidity when cured. The composite material is pressable or moldable into a predetermined configuration before curing and holds the predetermined configuration with the structural rigidity when cured. The predetermined configuration can be, for example, a consumer good, preferably a cookware item, or machinery components.

Exemplary polymers for laminate embodiments of this disclosure include engineered resins. Engineered resins and thermoplastics are used today in fabrics and conveyor belts. These are resins typically blended with fluoropolymer and or silicone. The engineered resins are used for barrier or abrasion, not structure, as fluoropolymer or silicone incorporation generally prevents structural use of engineered resin. The material composite of this invention can incorporate 100% engineered resin until the woven glass substrate is sufficiently saturated such that, when molded, the engineered resin is consolidated to create a structural component. Another feature is that the invention bonds a nonstick material, such as a fluoropolymer or silicone to the 100% engineered resin. This provides good bond strength.

The present disclosure includes a composite material, including a flexible substrate impregnated with a heat resistant polymer material and coated with a nonstick coating, wherein the composite material has a structural rigidity when cured. The composite material is pressable or moldable, with one or more layers, into a predetermined configuration before or during curing and holds the predetermined configuration with the structural rigidity when cured. The predetermined configuration is a consumer good, preferably a cookware item, or machinery (e.g. vehicle) component.

Embodiments of this disclosure include surface coatings, such as applied by spray or dip coating, or as a film or coated fabric. In additional embodiments of this invention, the cooking surface is first dip or spray coated and then covered/laminated with a casted or laminate film, or coated fabric, of one or more of, for example: silicone materials and/or fluoropolymers, such as melt-processible fluoropolymers or blends of PTFE and melt-processible fluoropolymers. The spray coating and casted film, etc. desirably interlock together during curing, providing stronger bonding to the underlying cookware surface.

The present disclosure further provides a woven/plastic/nonstick laminate material with structural benefits, and that is pressable or otherwise moldable in a forming method to provide shaped cookware or other nonstick items/components. The material composite of this invention can incorporate a flexible and/or fibrous material impregnated with 100% engineered resin such that, when molded, the engineered resin is consolidated to create a structural component retaining the molded shape.

Other objects and advantages will be apparent to those skilled in the art from the following detailed description taken in conjunction with the appended claims and drawings.

### BRIEF DESCRIPTION OF THE DRAWINGS

FIG. 1 shows a laminate layer according to one embodiment.
FIGS. 2 and 3 show a cookware device according to one embodiment.
FIGS. 4 and 5 show a cookware device according to another embodiment.
FIGS. 6-8 illustrate a pressing method according to one embodiment.
FIGS. 9 and 10 show a cookware device according to another embodiment
FIGS. 11-13 illustrate a pressing method according to one embodiment.
FIGS. 14-15 shows a composite material, according to one embodiment.
FIGS. 16-17 shows the layers and building of the composite material of FIGS. 14-15.
FIG. 18 shows a multilayered composite material, according to one embodiment.
FIG. 19-22 each show an exemplary molded cookware, according to embodiments of this disclosure.
FIG. 23 shows a panini press surface, according to an embodiment.
FIGS. 24-27 illustrate molded cookware components, preferably as cooking appliance components, according to embodiments of this disclosure.

### DESCRIPTION OF THE INVENTION

The present disclosure provides an improved woven/nonstick laminate material with structural benefits, and that is pressable or otherwise moldable in a forming method to provide shaped cookware or other nonstick items/components.

The present disclosure provides heat resistant and/or nonstick materials, and products thereof, including cookware including at least a non-stick polymer cooking surface. As used herein, cookware includes, without limitation, various pots, pans, sheets and baskets, and bakeware such as cake/bread pans and cooking sheets, etc., and also components for cooking devices/appliances. The cookware includes a non-stick cooking surface formed of, or otherwise covered/coated by, a polymer material. Suitable polymer materials include, without limitation, silicone and fluoropolymer materials.

The present disclosure includes improved heat resistant materials and products, such as vehicle components and cookware, particularly for use in high speed, rapid cook, and/or high temperature conventional ovens. In several preferred embodiments, the products are fully made of a polymer material, and substantially or completely free of metal, and thus nonmetallic. Any suitable high heat resistant polymer can be used, as described above. References to "non-metallic" means that the entire formed product, and/or each layer or element, is devoid of metal.

Embodiments of this disclosure include a pressable laminate material including a flexible substrate coated with a nonstick material. The material to be pressed desirably includes two or more layers of the laminate material, or two different laminate materials, pressed together. The pressing of the planar laminate layers, under high heat and high pressure, into a non-planar shape provides the resulting structure (e.g., a cookware shape, etc.) with a sufficient structural rigidity for use. The materials used, the number of laminate layers, and the intended configuration and shape, all contribute to the structural rigidity and strength of the resulting nonstick device. The desired number of layers, such as three, desirably more than three, for example, four or five, more desirably more than eight, and preferably in some instances at least ten, are laminated with or without the nonstick coating (e.g., substituting another heat resistant polymer for middle layer laminate coating), and then, if needed, covered with the non-stick fluoropolymer film or a coated fabric, etc., to one or both sides of the heavily laminated product.

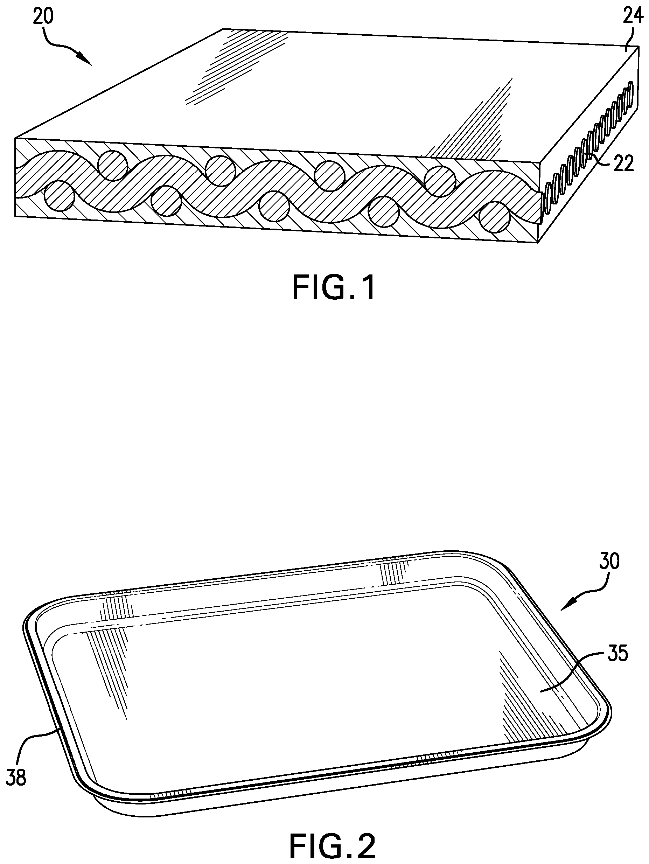

FIG. 1 shows a laminate material 20 for a laminate layer of embodiments of this disclosure. The laminate material includes a flexible substrate 22 coated by a heat resistant polymer 24, preferably one that provides a nonstick surface to the coated substrate. Exemplary flexible substrates include woven substrates, non-woven substrates, open mesh/leno weave substrates, braided substrates, and/or unidirectional fabrics, such as made using fiberglass or other suitable fibrous materials, such as Kevlar, Nomex, carbon fiber, quartz fiber, PEEK, PAEK, PPS, PES, PPSU, LCP, and/or PAI fibers, or combinations of such fibers or yarns.

As used herein, "heat resistant" refers to the ability of a material to withstand continuous-use temperatures of about 400° F (about 204° C) or greater. The heat resistant polymer can be neat or reinforced, and can include, for example, a fluoropolymer (e.g., PTFE, FEP, PFA, MFA^{®}, ETFE), a fluoroelastomer, a silicone rubber, a silicone resin, a urethane rubber, a urethane resin, a polyketone, a polyether ether ketone (PEEK), a polyamide-imide (PAI), a polyphenylene sulfide (PPS), a polyphenylsulfone (PPSU), a liquid crystal polyester (LCP), a polyether sulfone (PES), an epoxy, quartz, fluorinated materials, such as fluorinated mica, combinations thereof, and/or other nonstick, easy clean materials.

In embodiments of this disclosure, the polymer 24 is or provides a nonstick coating, such as of the materials disclosed herein, applied over top of the substrate 22, or any optional middle layer. The nonstick coating 24 is desirably capable of being easily cleaned, and is chemical resistant, abrasion resistant, and stain resistant. Exemplary nonstick materials include fluoropolymers and silicone rubbers and resins. Once formed, the composite material can desirably withstand temperatures of greater than 375° F (191° C) continuous, and up to 800° F (426° C), depending upon the engineered resin utilized. The polymer 24 and/or the nonstick coating can be applied over the substrate by 22, for example, dip, spray, curtain, or powder coating. The nonstick coating surface can alternatively be applied by laminating a cast, extruded, skived, or PTFE coated fabric to the surface of any intermediate polymer material. The nonstick coating can be applied before forming or after forming a press-molded part, described further below.

In embodiments of this disclosure, a microwave absorbent material or coating can be applied before the coating polymer 24 is applied, or as a component of the coating polymer/nonstick surface application. This can be applied as a coating or laminated material, in same manner as mentioned above.

The composite materials of embodiments of this disclosure are useful in forming press-molded objects, such as consumer goods and cookware. According to some embodiments, the forming process begins with a substrate, such as a woven fiberglass substrate, which can include plies of coated linear strand fiberglass. The substrate can optionally be saturation coated with a solution of dissolved or suspended plastic, such as PAI, PPS, PEEK, PPSU, PES, or combinations thereof, or other suitable plastics known for high temperature use. Multi-pass applications of the coating can be used to adequately saturate the fibers, and build adequate weight for flow and forming. The plastic coated substrate is preferably dried and prepared to a pre-preg (pre-impregnated) condition, similar to that performed for epoxy resins on fiberglass used in printed circuit boards.

A top coat of PTFE or other nonstick material is applied to one or both sides. The fluoropolymer coating provides mold release functionalities during forming, and provides a high performance release finish for cooking (similar to pan coatings). The coating can be applied by, for example, a heavily coated single ply coating and/or multi-ply lamination of lighter weight woven or linear strand fiberglass.

The dried, but not cured, composite material can be wound into a roll and stored for further processing from the roll into an automated forming press, or sheeted to discrete sizes for manually loading into a press. The forming presses typically include heated platens to which male and female forming dies are attached, with temperatures generally adjustable to 600° F (315° C) or higher. The pressed structure is typically formed at a temperature at or above the glass transition temperature (Tg) of one or more of the materials. Pressures are also generally adjustable and vary according to size. Testing has shown reasonable results as low as 2.1 bar (30 psi) in an air load press capable of 3 tons total applied pressure. Larger part sizes and multiple part molds may require significantly more pressure. Matched form molds, or coining, is a form of compression molding requiring higher pressures; for proposed objects of this invention, 30- to 50-ton hydraulic presses are likely needed.

After forming the edges may be trimmed in a die cutting station, such as "steel rule die" or "clicker press". The formed parts can be post cured in a batch oven with a stepped temperature cycle to obtain higher operating temperatures and to cure the PTFE and enhance the bond of the PTFE to the tray. The post forming processing can be used to crosslink, chain extend, or otherwise cure additionally included polymer materials, such as an engineered resin. Also, the additional polymer material could be post-cured to temperatures capable of fusing with the fluoropolymers.

As will be appreciated, various and alternative post pressing treatments are available depending on need and/or final product use. For some components, a multi-step forming process is used. As an example, some vehicle/aircraft components can be pressed, heat cleaned (cooked/bleached), die cut, and then pressed a second time before any final curing. In another example, for making rods or pegs, a laminate of desired thickness is pressed flat, then cut into square rods, each then machined (drill, tap, mill, lathe, cut, etc) into a cylindrical rod, then final processed into the end part. In some embodiments. laminations greater than approximately four layers may need to be pre-pressed flat, then shaped by some manipulation and/or machining process. This can be used to form the "taco trays" and/or "wave trays" shown herein below. As another example, laminates can be machined to expose middle layers before final coating on the exposed layers.

In embodiments of this disclosure, the material can be cured during the molding process if molding is done at high enough temperature. Another option is to post cure in an inline process such as a hot air or infrared oven on a conveyor. In embodiments of this invention, molding is performed between 600° F (315° C) (and preferably 640° F (338° C)) and 800° F (426° C). At these temperatures, the process can complete and no post cure is needed. The higher temperature allows the fluoropolymer to cure at a same time as molding and thus reduces the need for post cure.

In embodiments of this disclosure the composite is formed including a woven substrate of a high temperature thermoplastic material (e.g., capable of continuous operation at temperatures of 375° F (191° C) or higher), such as PEEK, PAEK, PPS, PES, PPSU, LCP, and/or PAI, that can be coated with additional compatible thermoplastic material, and that coating could include chopped fiber or other reinforcement and then the material could be top coated with a nonstick surface.

Also, for additional dimensional strength, a non-woven, woven, or unidirectional fabric consisting of a reinforcement material capable of withstanding the operating temperatures of 375° F (191° C) or higher continuously could be laminated to a thermoplastic woven material before or during the additional coating passes mentioned above.

The pressed composites of embodiments of this disclosure desirably have or include a rigid molded shape, and are insulative in nature (i.e., does not want to conduct heat), durable, nonstick, low friction, cleanable, chemical resistant, corrosion resistant, heat resistant, and/or capable of bleeding heat quickly. Also, desirably, the substrate weave is capable of conforming to shapes during a compression or thermoforming process such that it will not tear, wrinkle, or fold. The composite material and forming of this invention are useful in cookware and cooking appliance components such as, without limitation, bakeware, microwave applications, and oven cooking (convention, conveyor, rapid cook, brick/stone, accelerated cooking, etc.). The composite material and forming of this disclosure are useful in other consumer or industrial goods/applications, and/or automotive applications such as, without limitation, providing corrosion and/or chemical resistance or thermal resistance or insulation to parts, such as tubing, fluid containers, oil pans, and/or exhaust parts. These properties also make the material useful in forming aerospace and/or defense parts.

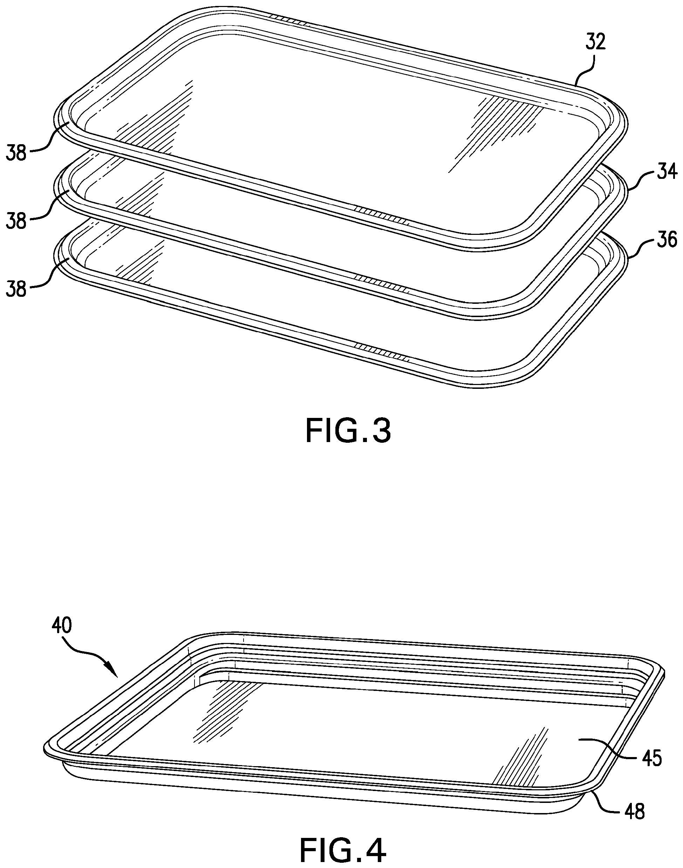

FIG. 2 shows a cookware composite 30, namely a non-porous (solid surface) cooking sheet or pan. As shown in the exploded view of FIG. 3, the cookware composite 30 is formed from pressing together three separate laminate layers 32, 34, and 36. The three laminate layers 32-36 can be the same or different laminate materials. For example, each can be a fluoropolymer coated flexible substrate, providing nonstick planar cooking surface 35. Alternatively, for example, the middle laminate layer 34 can include a different polymer material, optionally without the nonstick material, to promote layer adhesion during pressing. As another alternative, a non-stick coating can be separately applied to the laminate composite during or after pressing.

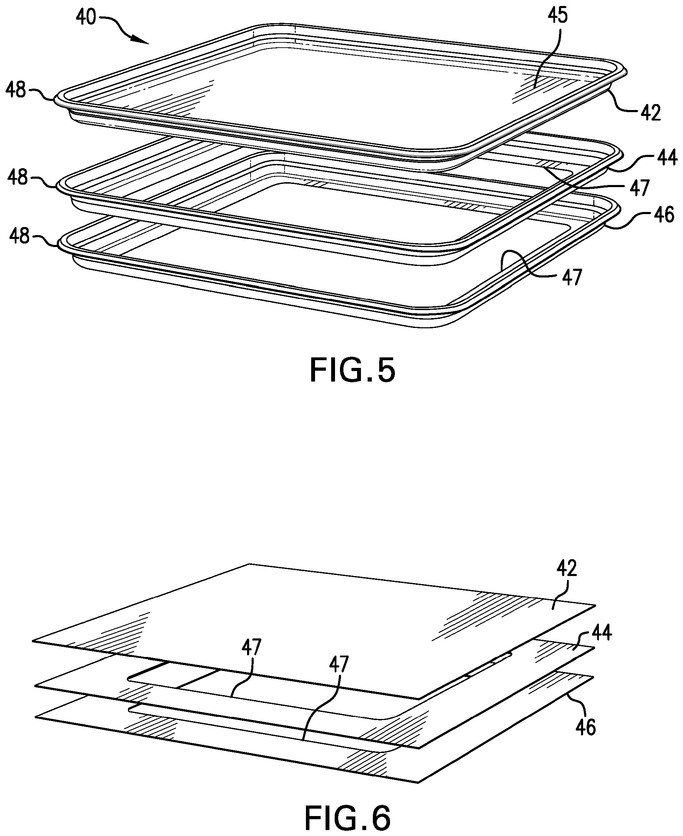

Each of the three laminate layers 32-36 began as a planar sheet (FIG. 6). Pressing formed a cookware shape, having raised rim 38. The raised rim 38, extending fully around the peripheral edge, provides a cookware edge structure to maintain food and/or promote handling, as well as provides additional structural rigidity to the device. As will be appreciated, various sizes, shapes, materials, and number of laminate layers are available for such a device, depending on need.

FIG. 4 illustrates another cookware composite 40, shown with a similar shape as composite 30, but having a different laminate construction. As shown in the exploded view of FIG. 5 A first, or top, laminate layer 42 is solid to provide planar cooking surface 45, but both second laminate layer 44 and third laminate layer 46 have an 'edge-only' configuration, with a center cutout 47. Laminate layers 44 and 46 are rim layers that provide structural support, particularly for the raised rim 48 area, while leaving a single ply food contact area 45 for enhanced cooking performance due to less mass in the sheet/tray device 40.

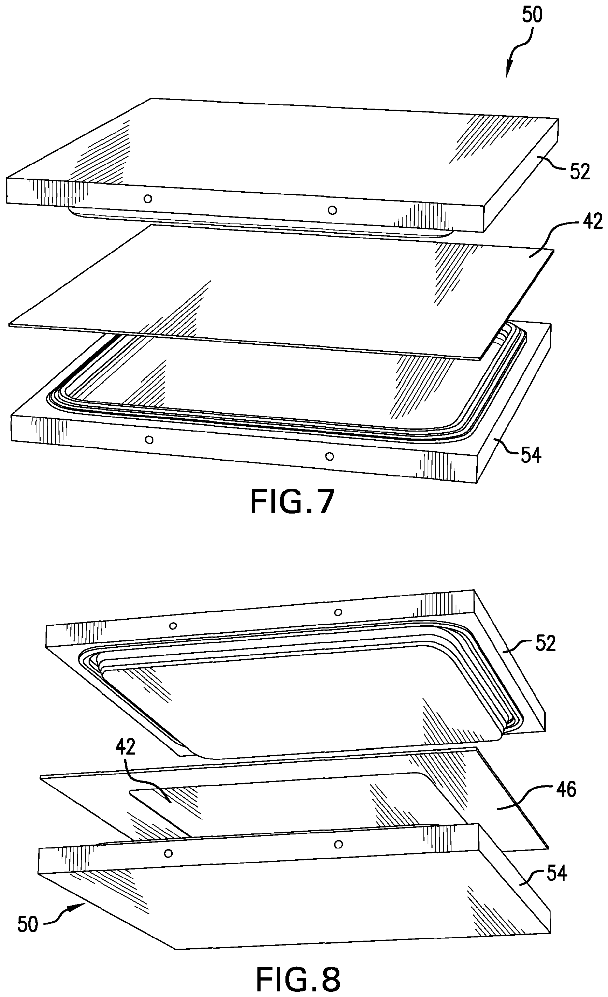

FIGS. 6-8 illustrate a forming method of the composite 40. In FIG. 6, the three laminate layers 42-46 are stacked in the planar sheet form. The laminate layers 42-46 can be any suitable laminate, such as E-glass and S-glass coated with fluoropolymers (e.g., PTFE), and are pre-sized/shaped as needed, such as by cutting or similar technique. The pre-assembled, stacked laminates are added to the press device 50, shown in Figs. 7 and 8 from different angles. The upper and lower press plates 52 and 54, have a shape to provide the raised rim 48 during pressing. In embodiments, the pressing force is greater than 1 ton of pressure, at temperatures greater than 600°F (about 315°C), desirably greater than 630°F (about 332°C). The composites can be punched to size after the heated and pressurized lamination process via, for example, a clicker press and/or pre-manufactured punch dies.

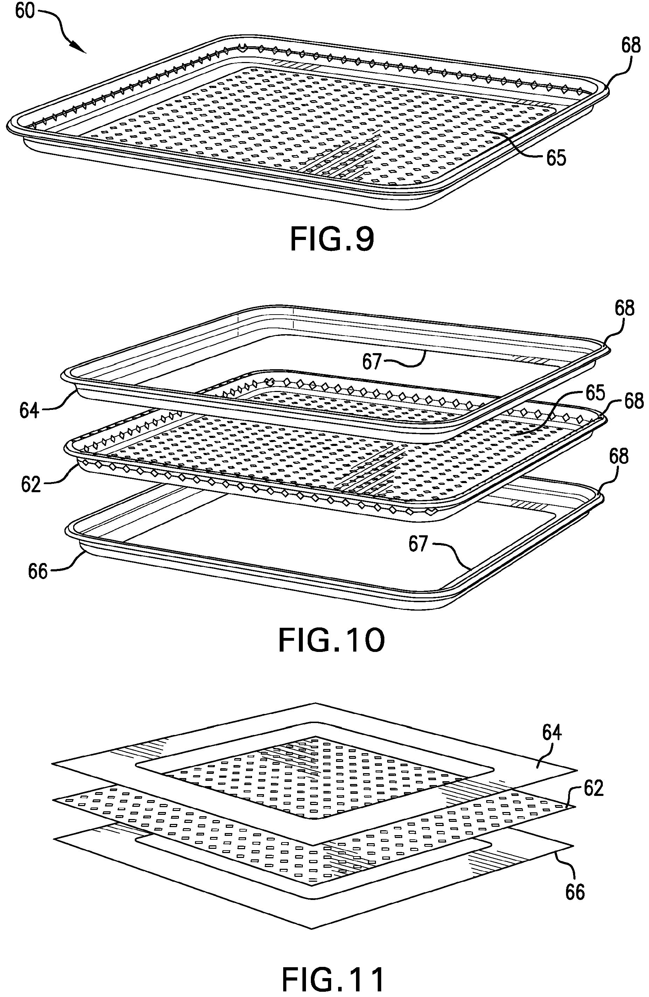

FIG. 9 illustrates another cookware composite 60, shown as a square tray or basket, but having yet another laminate construction. As shown in the exploded view of FIG. 10, a middle laminate layer 62 has an open mesh to provide improved air flow for improved cooking. The middle laminate is disposed between upper and lower laminate layers 64 and 66 each having a solid/non-mesh 'edge-only' configuration, with a center cutout 67. Laminate layers 64 and 66 likewise provide structural support, particularly in the raised rim 68 area, while leaving a single ply mesh food contact area 65 for enhanced cooking performance. In addition, the sandwiched mesh layer improves aesthetics and tactic feel in the raised rim 68.

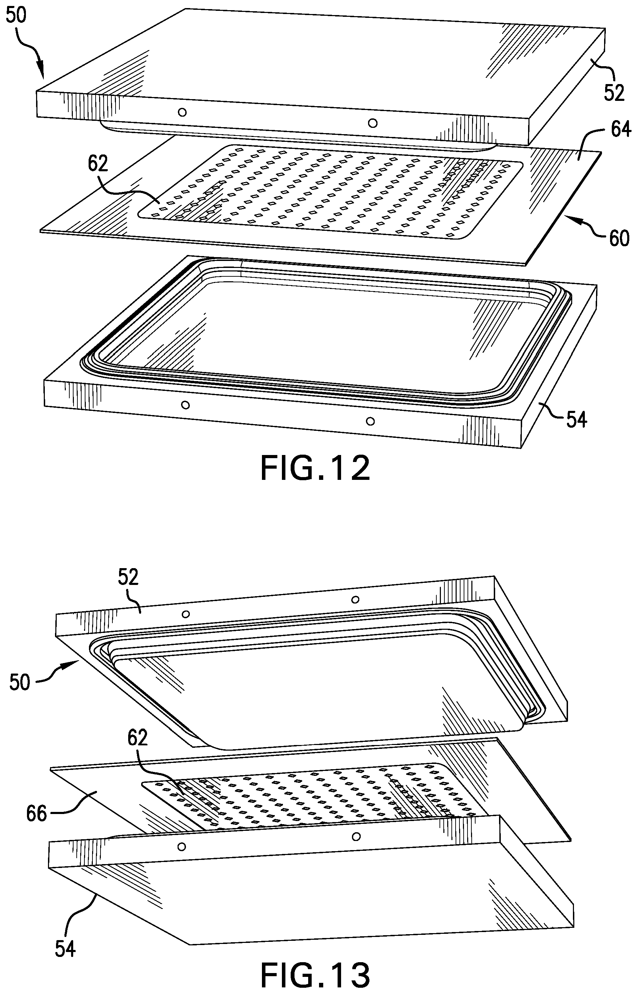

FIGS. 11-13 illustrate a forming method of the composite 60. In FIG. 11, the three laminate layers 62-66 are stacked in the planar sheet form. The pre-assembled, stacked laminates are added to the press device 50, shown in Figs. 12 and 13, again from different angles. The upper and lower press plates 52 and 54, have a shape to provide the raised rim 68 during pressing.

In embodiments of this disclosure, one or more of the individual laminate layer composite of this invention can incorporate 100% engineered resin. The engineered resin can be applied to the flexible substrate until the substrate is sufficiently saturated such that, when molded, the engineered resin is consolidated to create a structural component. The invention further bonds an outer layer of fluoropolymer or silicone to the 100% engineered resin. This is easily done and with good bond strength.

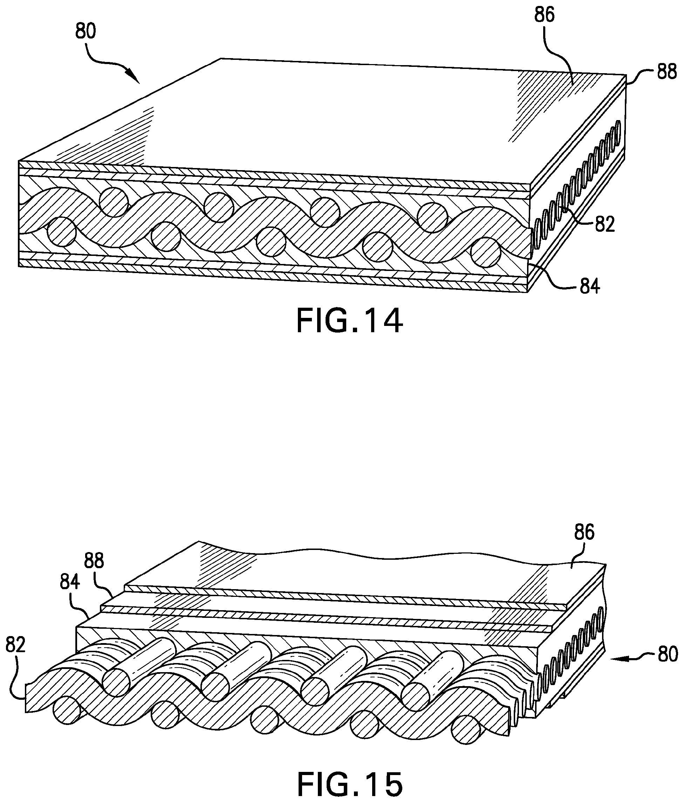

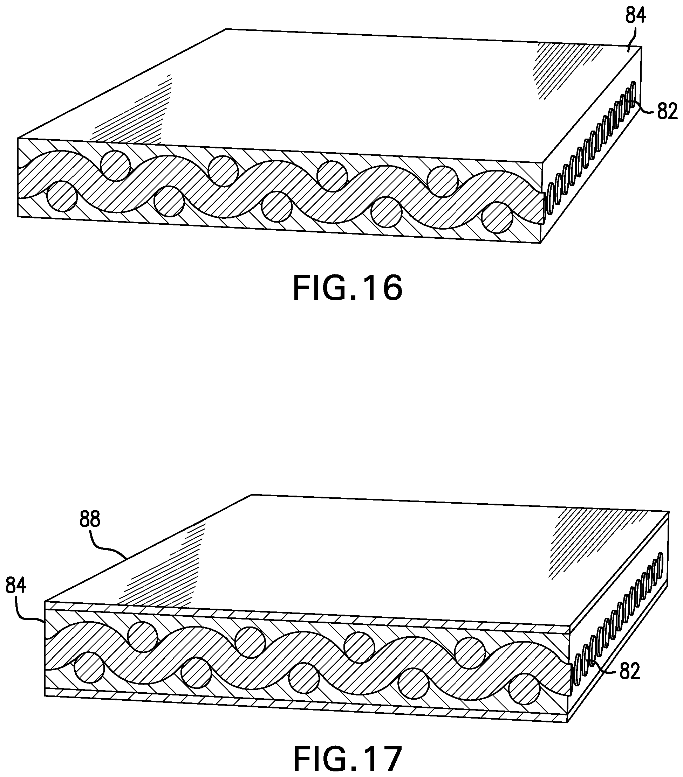

Embodiments of this disclosure provides high temperature (≥375° F) resistant, formable composites. As shown in FIGS. 14 and 15, a composite 80 can be formed by impregnating and/or coating one or more substrates 82 with a plastic material 84, as shown in FIG. 16. Exemplary flexible substrates include woven substrates, non-woven substrates, open mesh/leno weave substrates, braided substrates, and/or unidirectional fabrics, such as made using fiberglass or other suitable fibrous materials, such as Kevlar, Nomex, carbon fiber, quartz fiber, PEEK, PAEK, PPS, PES, PPSU, LCP, and/or PAI fibers, or combinations of such fibers or yarns. Exemplary plastic materials include engineered thermoplastic materials and blends thereof. The engineered thermoplastic desirably acts as a support and structure for the composite once molded.

A nonstick coating 86 can be applied over the engineered resin 84 by, for example, dip, spray, curtain, or powder coating. The nonstick coating 86 surface can be applied by laminating a cast, extruded, skived, or PTFE coated fabric to the surface of the engineered resin. The nonstick coating 86 can be applied before forming or after forming a molded part, described further below.

In embodiments of this disclosure, a microwave absorbent material or coating 88 can be applied before the nonstick coating 86 is applied, as shown in FIG. 17, or as a component of the nonstick surface application. As with the nonstick coating 86 application, this can be applied as a coating or laminated material, in same manner as mentioned above.

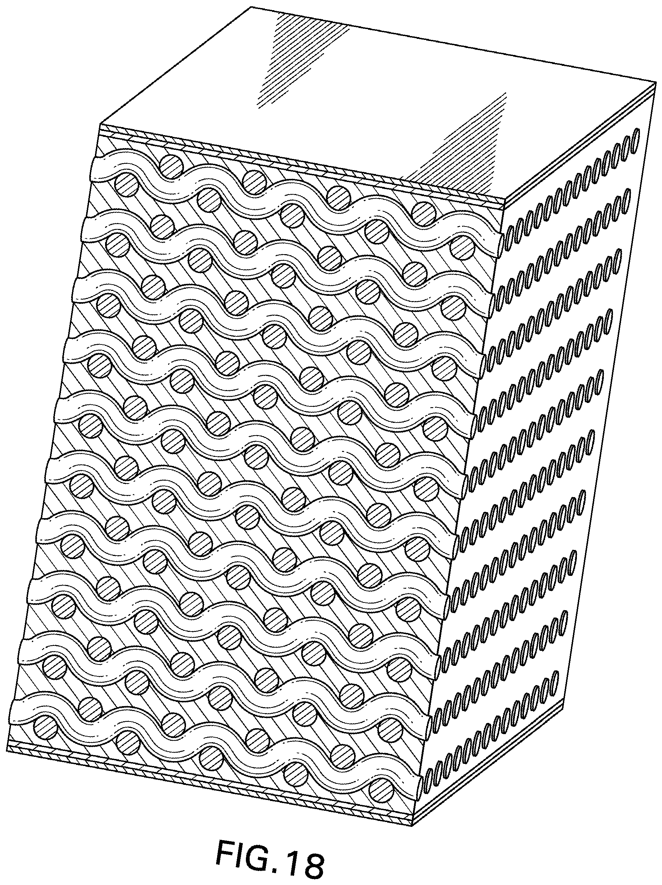

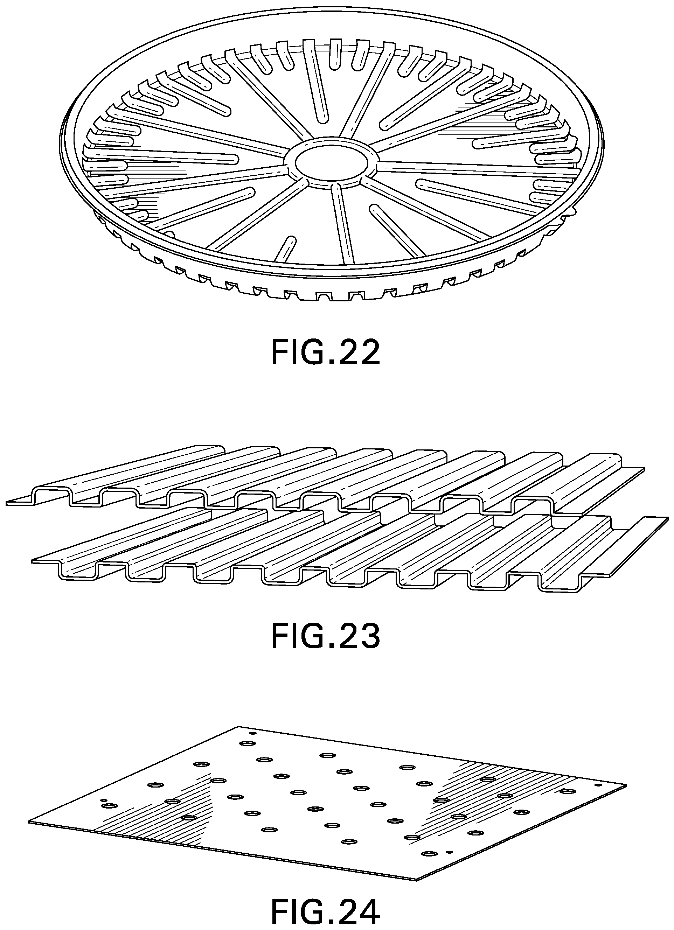

Various and alternative sizes, shapes, and configurations are available for the plastic impregnated/coated substrate. For example, more than one substrate layer can be impregnated. In addition, more than one separately impregnated substrate can be laminated together prior to top coating. The multiple layers can be the same or different substrate materials, such as, for example, a coated woven can be laminated to a coated nonwoven on one or both sides. The type and number of layers can be adjusted for rigidity, depending on need. For example, FIG. 18 shows a laminate composite with ten layers of resign impregnated substrate, which can provide the desired rigidity for applications such as the oven components of FIGS. 24-27. The desired number of layers, such as more than three, desirably, more than five, more desirably more than eight, and preferably at least ten, are laminated without the nonstick coating, and then, if needed, covered with the non-stick fluoropolymer film or a coated fabric, etc., to one or both sides of the heavily laminated product.

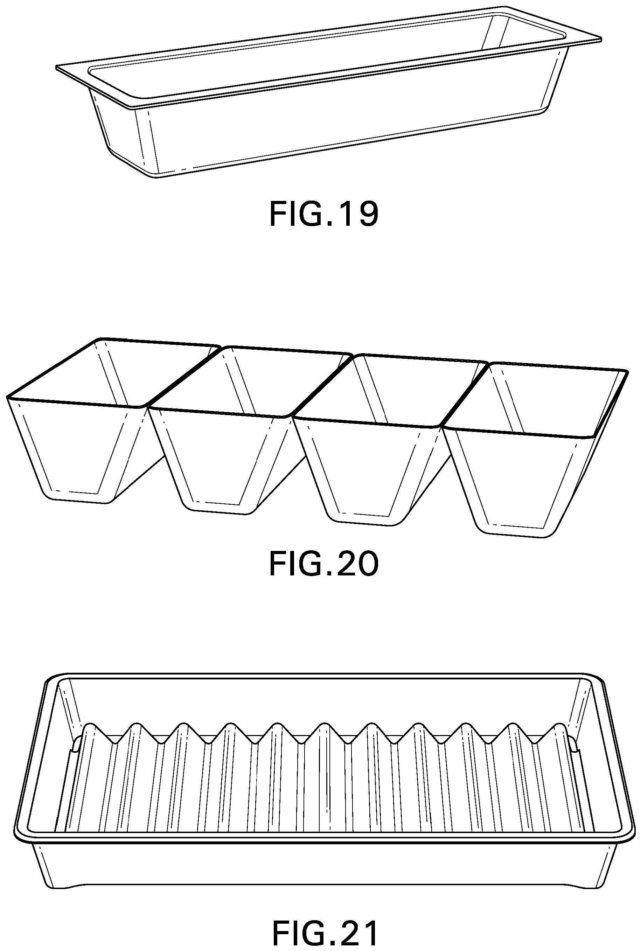

Exemplary cookware pressed or molded from any of the laminate materials of this disclosure include cooking sheets or trays, such as discussed above, bread or cake pans, such as shown in FIG. 19. Other exemplary cookware includes egg pans or inserts, cups, bowls, cookie sheets, pizza pans, panini presses or grill pans, muffin pans, croissant pans, cake pans, pie pans, plates, covers, or other cookware accessory. FIG. 20 is a pressed bread-proofing tray or pan, including a plurality of proofing wells. FIG. 21 is a taco tray, including a pressed undulating surface, each V-shaped well for holding a taco. The tray is shown with side walls, but can be formed without, or with any side structure. FIG. 22 shows a pressed pizza pan, including an exemplary ribbed cooking surface. FIG. 23 shows a panini press surface, including an undulating or other ribbed surface. The panini press surface can be incorporated into a panini press to impart nonstick benefits.

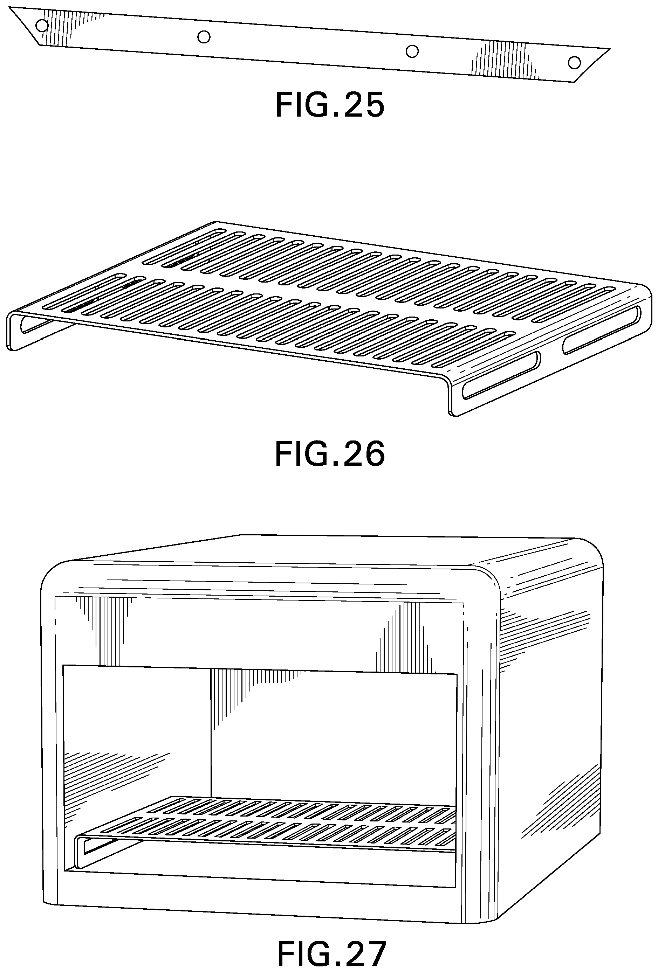

Cookware of this disclosure further includes cooking components, such as appliance components, preferably, but without limitation, oven, fryer, or toaster components. FIG. 24 shows an oven rack or other shelf structure. FIG. 25 shows a rail or bar that could be used in an oven, but not necessarily in direct contact with the food. Using the material of this disclosure to form oven components can provide the oven, etc. with easier cleaning, due to the nonstick surface. FIG. 26 shows an oven or toaster rack, and FIG. 27 shows the rack within a representative oven.

Thus, the disclosure provides a laminate composite material that is formable by heated press or other stamp/press molding. The nonstick coating can be applied prior to forming, thereby providing an efficient forming process, and allowing for storing and transfer of the material prior to pressing, stamping or otherwise molding.

## Claims

1. A method of forming nonstick components (30, 40, 60) for cooking, the method comprising:
providing at least two laminate layers (32, 34, 36, 42, 44, 46, 62, 64, 66), each including a flexible substrate coated with a nonstick material;
further comprising aligning the at least two laminates over one another for pressing;
pressing the at least two laminates together under heat and pressure to form a cookware, further comprising pressing the at least two laminates to form a raised rim (38, 48, 68),
**characterized in that** a first laminate (34, 36, 44, 46, 64, 66) of the laminate layers comprises a rim layer, wherein the rim layer extends around a peripheral edge of a further laminate (32, 42, 62) of the laminates creating a support surface (35, 45, 65) of only the further laminate (32, 42, 62).

2. The method of Claim 1, further comprising pressing three separate laminate layers (32, 34, 36, 42, 44, 46, 62, 64, 66) together.

3. The method of Claim 2, wherein each of first laminate (34, 44, 64) and a second laminate (36, 46, 66) of the laminate layers comprises a rim layer, wherein the rim layers extend around a peripheral edge of the further laminate (32, 42, 62) of the laminates creating a support surface (35, 45, 65) of only the further laminate (32, 42, 62).

4. The method of Claim 2 or 3, further comprising pressing the second laminate (36, 46, 66) between the first laminate (34, 44, 64) and the further laminate (32, 42, 62).

5. The method of Claim 3 or 4, wherein the further laminate (32, 42, 62) comprises air flow openings, and further comprising pressing the further laminate (32, 42, 62) between the first (34, 44, 64) and second (36, 46, 66) laminates.

6. The method of Claim 5, further comprising:
a heat resistant polymer material comprising a fluoropolymer, preferably a perfluoroalkoxy alkane (PFA), TFE/perfluoromethylvinylether copolymer (MFA), or fluorinated ethylene propylene (FEP), homopolymer or copolymers of PTFE, or combinations of such fluoropolymers; and
the flexible substrate comprises a woven substrate, non-woven substrate, open mesh/leno weave substrate, braided substrate, and/or unidirectional fabrics, formed of fiberglass, Kevlar, Nomex, carbon fiber, quartz fiber, PEEK, PAEK, PPS, PES, PPSU, LCP, and/or PAI fibers, or combinations of such fibers or yarns.

7. A nonstick device for cooking comprising a pressed laminate with structural rigidity including at least two laminate layers (32, 34, 36, 42, 44, 46, 62, 64, 66) pressed together under heat and pressure into a shaped device, wherein each of the laminate layers (32, 34, 36, 42, 44, 46, 62, 64, 66) separately include a flexible substrate coated with a nonstick coating, wherein the nonstick device comprises three separate laminate layers (32, 34, 36, 42, 44, 46, 62, 64, 66) pressed together, **characterized in that** each of first laminate (34, 44, 64) and a second laminate (36, 46, 66) of the laminate layers comprises a rim layer, wherein the rim layers extend around a peripheral edge of a third laminate (32, 42, 62) of the laminates creating a support surface of only the third laminate (32, 42, 62), preferably wherein the third laminate (32, 42, 62) is pressed above or between the first laminate (34, 44, 64) or the second laminate (36, 46, 66).

8. The nonstick device of Claim 7, wherein the flexible substrate is impregnated with a heat resistant polymer material.

9. The nonstick device of Claim 7 or 8, further comprising heat resistant polymer material comprising a fluoropolymer, preferably PTFE, FEP, PFA, MFA^{®}, or ETFE, a fluoroelastomer, a silicone rubber, a silicone resin, a urethane rubber, a urethane resin, a polyketone, a polyether ether ketone (PEEK), a polyamide-imide (PAI), a polyphenylene sulfide (PPS), a polyphenylsulfone (PPSU), a liquid crystal polyester (LCP), a polyether sulfone (PES), an epoxy, quartz, fluorinated materials, such as fluorinated mica, combinations thereof.

10. The nonstick device of any of Claims 7 to 9, wherein:
the flexible substrate comprises a woven substrate, non-woven substrate, open mesh/leno weave substrate, braided substrate, and/or unidirectional fabrics, formed of fiberglass, Kevlar, Nomex, carbon fiber, quartz fiber, PEEK, PAEK, PPS, PES, PPSU, LCP, and/or PAI fibers, or combinations of such fibers or yams; and
the nonstick coating applied over top of the polymer material is a fluoropolymer or other nonstick material.

11. The nonstick device of any of Claims 7 to 10, wherein the device comprises cookware for holding food items during cooking, including a food support surface comprising a cooking surface (35 45) of the nonstick coating, wherein the cookware is pressed or molded in the form of a basket, tray, sheet, pan, bowl or cup, plate or cover, and wherein each of the cookware and food support surface is fully free of metal.

## Patentansprüche

1. Ein Verfahren zum Formen von Antihaft-Komponenten (30, 40, 60) zum Kochen, wobei das Verfahren umfasst:
Bereitstellen von mindestens zwei Laminatschichten (32, 34, 36, 42, 44, 46, 62, 64, 66), die jeweils ein mit einem Antihaftmaterial beschichtetes flexibles Substrat enthalten;
ferner umfassend das Ausrichten der mindestens zwei Laminate übereinander zum Pressen;
Zusammenpressen der mindestens zwei Laminate unter Hitze und Druck, um ein Kochgeschirr zu formen, ferner umfassend das Pressen der mindestens zwei Laminate, um einen erhöhten Rand (38, 48, 68) zu formen,
**dadurch gekennzeichnet, dass** ein erstes Laminat (34, 36, 44, 46, 64, 66) der Laminatschichten eine Randschicht umfasst, wobei die Randschicht um eine Umfangskante eines weiteren Laminats (32, 42, 62) der Laminate verläuft, bildend eine Auflagefläche (35, 45, 65) nur des weiteren Laminats (32, 42, 62).

2. Das Verfahren nach Anspruch 1, ferner umfassend das Zusammenpressen von drei separaten Laminatschichten (32, 34, 36, 42, 44, 46, 62, 64, 66).

3. Das Verfahren nach Anspruch 2, wobei das erste Laminat (34, 44, 64) und das zweite Laminat (36, 46, 66) der Laminatschichten jeweils eine Randschicht umfassen, wobei die Randschichten um eine Umfangskante des weiteren Laminats (32, 42, 62) der Laminate verlaufen, bildend eine Auflagefläche (35, 45, 65) nur des weiteren Laminats (32, 42, 62).

4. Das Verfahren nach Anspruch 2 oder 3, ferner umfassend das Pressen des zweiten Laminats (36, 46, 66) zwischen dem ersten Laminat (34, 44, 64) und dem weiteren Laminat (32, 42, 62).

5. Das Verfahren nach Anspruch 3 oder 4, wobei das weitere Laminat (32, 42, 62) Luftströmungsöffnungen umfasst und ferner umfassend das Pressen des weiteren Laminats (32, 42, 62) zwischen dem ersten (34, 44, 64) und dem zweiten (36, 46, 66) Laminat.

6. Verfahren nach Anspruch 5, ferner umfassend:
ein hitzebeständiges Polymermaterial, umfassend ein Fluorpolymer, vorzugsweise ein Perfluoralkoxyalkan (PFA), TFE/Perfluormethylvinylether-Copolymer (MFA) oder fluoriertes Ethylenpropylen (FEP), Homopolymer oder Copolymere von PTFE, oder Kombinationen solcher Fluorpolymere; und
das flexible Substrat umfassend ein gewebtes Substrat, ein nicht gewebtes Substrat, ein Substrat mit offener Maschen-/Dreherbindung, ein geflochtenes Substrat und/oder ein unidirektionales Gewebe, geformt aus Glasfasern, Kevlar, Nomex, Kohlefasern, Quarzfasern, PEEK, PAEK, PPS, PES, PPSU, LCP und/oder PAI-Fasern oder Kombinationen solcher Fasern oder Garne.

7. Eine Antihaftvorrichtung, umfassend ein gepresstes Laminat mit struktureller Steifigkeit, das mindestens zwei Laminatschichten (32, 34, 36, 42, 44, 46, 62, 64, 66) enthält, die unter Hitze und Druck zu einer geformten Vorrichtung zusammengepresst werden, wobei jede der Laminatschichten (32, 34, 36, 42, 44, 46, 62, 64, 66) separat ein flexibles Substrat enthält, das mit einer Antihaftbeschichtung beschichtet ist, wobei die Antihaftvorrichtung drei separate Laminatschichten (32, 34, 36, 42, 44, 46, 62, 64, 66) umfasst, die miteinander verpresst sind, **dadurch gekennzeichnet, dass** das erste Laminat (34, 44, 64) und das zweite Laminat (36, 46, 66) der Laminatschichten jeweils eine Randschicht umfassen, wobei die Randschichten um eine Umfangskante eines dritten Laminats (32, 42, 62) der Laminate verlaufen, bildend eine Auflagefläche nur des dritten Laminats (32, 42, 62), wobei das dritte Laminat (32, 42, 62) vorzugsweise über oder zwischen dem ersten Laminat (34, 44, 64) oder dem zweiten Laminat (36, 46, 66) verpresst ist.

8. Die Antihaftvorrichtung nach Anspruch 7, wobei das flexible Substrat mit einem hitzebeständigen Polymermaterial imprägniert ist.

9. nach Anspruch 7 oder 8, ferner umfassend ein hitzebeständiges Polymermaterial, welches ein Fluorpolymer enthält, vorzugsweise PTFE, FEP, PFA, MFA^{®} oder ETFE, ein Fluorelastomer, einen Silikonkautschuk, ein Silikonharz, einen Urethankautschuk, ein Urethanharz, ein Polyketon ein Polyetheretherketon (PEEK), ein Polyamidimid (PAI), ein Polyphenylensulfid (PPS), ein Polyphenylsulfon (PPSU), ein Flüssigkristallpolyester (LCP), ein Polyethersulfon (PES), ein Epoxid, Quarz, fluorierte Materialien wie fluorierter Glimmer und Kombinationen davon.

10. Die Antihaftvorrichtung nach einem der Ansprüche 7 bis 9, wobei:
das flexible Substrat ein gewebtes Substrat umfasst , ein nicht gewebtes Substrat, ein Substrat mit offener Maschen-/Dreherbindung, ein geflochtenes Substrat und/oder ein unidirektionales Gewebe, geformt aus Glasfasern, Kevlar, Nomex, Kohlefasern, Quarzfasern, PEEK, PAEK, PPS, PES, PPSU, LCP und/oder PAI-Fasern oder Kombinationen solcher Fasern oder Garne; und
die Antihaftbeschichtung, die auf das Polymermaterial aufgetragen wird, ein Fluorpolymer oder ein anderes Antihaftmaterial ist.

11. Die Antihaftvorrichtung nach einem der Ansprüche 7 bis 10, wobei die Vorrichtung Kochgeschirr zum Halten von Lebensmitteln während des Kochens umfasst, einschließlich einer Lebensmittelauflagefläche, die eine Kochfläche (35 45) der Antihaftbeschichtung umfasst, wobei das Kochgeschirr in Form eines Korbes, eines Tabletts, eines Blechs, einer Pfanne, einer Schüssel oder Tasse, eines Tellers oder eines Deckels gepresst oder geformt ist, und wobei sowohl das Kochgeschirr als auch die Lebensmittelauflagefläche vollständig metallfrei sind.

## Revendications

1. Une méthode de formation de composants antiadhésifs (30, 40, 60) pour la cuisson, comprenant :
fournir au moins deux couches stratifiées (32, 34, 36, 42, 44, 46, 62, 64, 66), chacune comprenant un substrat flexible recouvert d'un matériau antiadhésif ;
en outre comprenant, aligner les aux moins deux stratifiés l'un sur l'autre pour les presser ;
presser les aux moins deux stratifiés sous la chaleur et la pression pour former un ustensile de cuisine, en outre en pressant les aux moins deux stratifiés pour former un bord surélevé (38, 48, 68),
**caractérisé en ce qu'**un premier stratifié (34, 36, 44, 46, 64, 66) des couches de stratifié comprend une couche de bord, dans laquelle la couche de bord s'étend autour d'un bord périphérique d'un stratifié supplémentaire (32, 42, 62) des stratifiés, créant une surface de support (35, 45, 65) uniquement du stratifié supplémentaire (32, 42, 62).

2. La méthode selon la revendication 1, en outre comprenant le pressage de trois couches stratifiées séparées (32, 34, 36, 42, 44, 46, 62, 64, 66) ensemble.

3. La méthode selon la revendication 2, dans lequel chacun des premier stratifiés (34, 44, 64) et deuxième stratifiés (36, 46, 66) des couches de stratifiés comprend une couche de bord, dans laquelle les couches de bord s'étendent autour d'un bord périphérique du stratifié supplémentaire (32, 42, 62) des stratifiés, créant une surface de support (35, 45, 65) uniquement du stratifié supplémentaire (32, 42, 62).

4. La méthode selon la revendication 2 ou 3, comprenant en outre le pressage du deuxième stratifié (36, 46, 66) entre le premier stratifié (34, 44, 64) et le stratifié supplémentaire (32, 42, 62).

5. La méthode selon la revendication 3 ou 4, dans lequel le stratifié supplémentaire (32, 42, 62) comprend des ouvertures d'écoulement d'air, et comprenant en outre le pressage du stratifié supplémentaire (32, 42, 62) entre le premier (34, 44, 64) et le deuxième (36, 46, 66) stratifiés.

6. La méthode selon la revendication 5, comprenant en outre:
un matériau polymère résistant à la chaleur comprenant un polymère fluoré, de préférence un alcane perfluoroalcoxy (PFA), un copolymère TFE/perfluorométhylvinyléther (MFA), ou de l'éthylène-propylène fluoré (FEP), un homopolymère ou des copolymères de PTFE, ou des combinaisons de tels polymères fluorés ; et
le substrat flexible comprend un substrat tissé, un substrat non tissé, un substrat à maille ouverte ou à armure nouée, un substrat tressé et/ou des tissus unidirectionnels, formés de fibres de verre, de Kevlar, de Nomex, de fibres de carbone, de fibres de quartz, de PEEK, de PAEK, de PPS, de PES, de PPSU, de LCP et/ou de fibres PAI, ou de combinaisons de ces fibres ou de ces fils.

7. Un dispositif antiadhésif pour la cuisson comprenant un stratifié pressé avec une rigidité structurelle comprenant au moins deux couches de stratifié (32, 34, 36, 42, 44, 46, 62, 64, 66) pressées ensemble sous la chaleur et la pression dans un dispositif façonné, dans lequel chacune des couches de stratifié (32, 34, 36, 42, 44, 46, 62, 64, 66) comprend séparément un substrat flexible recouvert d'un revêtement antiadhésif, dans lequel le dispositif antiadhésif comprend trois couches de stratifié séparées (32, 34, 36, 42, 44, 46, 62, 64, 66) pressées ensemble, **caractérisées en ce que** le premier stratifié (34, 44, 64) et le deuxième stratifié (36, 46, 66) des couches de stratifié comprennent chacun une couche de bord, dans laquelle les couches de bord s'étendent autour d'un bord périphérique d'un troisième stratifié (32, 42, 62) des stratifiés, créant une surface de support uniquement du troisième stratifié (32, 42, 62), de préférence dans lequel le troisième stratifié (32, 42, 62) est pressé au-dessus ou entre le premier stratifié (34, 44, 64) ou le deuxième stratifié (36, 46, 66).

8. Le dispositif antiadhésif selon la revendication 7, dans lequel le substrat flexible est imprégné d'un matériau polymère résistant à la chaleur.

9. Le dispositif antiadhésif selon la revendication 7 ou 8, comprenant en outre un matériau polymère résistant à la chaleur comprenant un fluoropolymère, de préférence PTFE, FEP, PFA, MFA^{®} ou ETFE, un fluoroélastomère, un caoutchouc de silicone, une résine de silicone, un caoutchouc d'uréthane, une résine d'uréthane, un polycétone, un polyéther-éther-cétone (PEEK), un polyamide-imide (PAI), un sulfure de polyphénylène (PPS), un polyphénylsulfone (PPSU), un polyester à cristaux liquides (LCP), un polyéther-sulfone (PES), un époxyde, du quartz, des matériaux fluorés, tels que le mica fluoré, et des combinaisons de ceux-ci.

10. Le dispositif antiadhésif selon l'une des revendications 7 à 9, dans lequel :
le substrat flexible comprend un substrat tissé, un substrat non tissé, un substrat à mailles ouvertes ou à armure nouée, un substrat tressé, et/ou des tissus unidirectionnels, formés de fibres de verre, de Kevlar, de Nomex, de fibres de carbone, de fibres de quartz, de PEEK, de PAEK, de PPS, de PES, de PPSU, de LCP, et/ou de fibres PAI, ou de combinaisons de ces fibres ou de ces fils ; et
le revêtement antiadhésif appliqué sur le matériau polymère est un fluoropolymère ou un autre matériau antiadhésif.

11. Le dispositif antiadhésif selon l'une des revendications 7 à 10, dans lequel le dispositif comprend un ustensile de cuisine pour contenir des aliments pendant la cuisson, y compris une surface de support des aliments comprenant une surface de cuisson (35 45) du revêtement antiadhésif, dans lequel l'ustensile de cuisine est pressé ou moulé sous la forme d'un panier, d'un plateau, d'une feuille, d'une casserole, d'un bol ou d'une tasse, d'une assiette ou d'un couvercle, et dans lequel chacun des ustensiles de cuisine et de la surface de support des aliments est entièrement exempt de métal.
